# EUROPÄISCHE PATENTSCHRIFT

(11) **EP 3 028 873 B1**
(45) Veröffentlichungstag und Bekanntmachung des Hinweises auf die Patenterteilung: **06.11.2019**
(21) Anmeldenummer: 15184373.7
(22) Anmeldetag: 09.09.2015
(51) Int. Cl.: B60C 9/20, B60C 9/18

(54) **NUTZFAHRZEUGREIFEN MIT GÜRTEL**
COMMERCIAL VEHICLE TYRE WITH BELT
PNEU A CEINTURE DE VEHICULE UTILITAIRE

(30) Priorität: 01.12.2014 DE 102014224497
(43) Veröffentlichungstag der Anmeldung: 08.06.2016
(73) Patentinhaber: Continental Reifen Deutschland GmbH, 30165 Hannover (DE)
(72) Erfinder: Gehlauf, Matthias, 31319 Sehnde (DE)
(74) Vertreter: Finger, Karsten

(56) Entgegenhaltungen:
- WO-A1-2014/203908
- DE-T5-112011 105 586
- JP-A- 2007 062 428
- US-A1- 2012 060 995

## Beschreibung

Die Erfindung betrifft einen Nutzfahrzeugreifen in Radialbauart mit einem zumindest dreilagigen Gürtel, wobei jede Gürtellage des Gürtels eine Festigkeitsträgerlage mit Stahlkorden als Festigkeitsträger, welche innerhalb der Festigkeitsträgerlage im Wesentlichen parallel zueinander angeordnet sind, sowie eine die Festigkeitsträgerlage einbettende Gummierung aufweist, wobei der Gürtel als radial äußerste Lage eine Schutzlage mit der ersten Festigkeitsträgerlage sowie von der Schutzlage nach radial innen betrachtet eine Arbeitslage mit der zweiten Festigkeitsträgerlage und eine Arbeitslage mit der dritten Festigkeitsträgerlage aufweist und wobei der Abstand D zwischen der ersten Festigkeitsträgerlage und der zweiten Festigkeitsträgerlage und der Abstand d zwischen den Festigkeitsträgerlagen der beiden Arbeitslagen die Relation 4,5 x d ≥ D ≥ 2 x d, bevorzugt die Relation 3,3 x d ≥ D ≥ 2,7 x d, erfüllen, wobei die Abstände gemessen sind in der axialen Mitte des Reifens.

Verstärkungslagen für den Gürtel von Fahrzeugluftreifen sind dem Fachmann in Material und Aufbau in unterschiedlichen Ausführungen bekannt. Die Festigkeitsträger jeder Gürtellage werden hierbei als Festigkeitsträgerlage, beispielsweise durch Kalandrieren oder Extrusion, in elastomeres Material eingebettet, um als Verstärkungslage im Reifen eingesetzt werden zu können.

Die gattungsgemäße DE 11 2011 105 586 T2 offenbart einen Fahrzeugluftreifen mit einer Gürtelschicht, die durch eine Mehrzahl von Gürtellagen, einschließlich einer Umfangsverstärkungsschicht, welche radial innerhalb zweier anderer Gürtellagen angeordnet ist, gebildet wird. Die Festigkeitsträger der Umfangsverstärkungsschicht schließen dabei mit der Reifenumfangsrichtung einen Winkel von maximal 5° ein. Der Kordfaden-Zwischenabstand Tk der beiden äußersten Gürtellagen ist dabei größer als der Kordfaden-Zwischenabstand T1 zwischen der Umfangsverstärkungsschicht und der radial außerhalb daran anschließenden Gürtellage. Dies wird dadurch realisiert, dass die beiden radial äußersten Lagen eine dickere Gummierung aufweisen als die anderen Lagen.

Die JP 2007 062428 A offenbart einen Fahrzeugluftreifen mit einem mehrlagigen Gürtel, wobei der Abstand der beiden radial äußersten Festigkeitsträgerlagen größer ist als der Abstand zur radial innerhalb daran anschließenden Festigkeitsträgerlage.

Die US2012/060995 offenbart einen Fahrzeugluftreifen mit einem mehrlagigen Gürtel, wobei der Abstand der beiden radial äußersten Festigkeitsträgerlagen kleiner oder gleich ist wie der Abstand zur radial innerhalb daran anschließenden Festigkeitsträgerlage.

Aus der DE10 2010 060 993 A1 ist ein Nutzfahrzeugreifen bekannt, der einen vierlagigen Gürtel mit Stahlkorden als Festigkeitsträger aufweist. Die Stahlkorde der radial innersten Gürtellage weisen einen Winkel von über 45° in Bezug auf die Umfangsrichtung auf. Diese Gürtellage wird aufgrund ihrer Funktion: Sperrung der Beweglichkeit der Arbeitslagen in Umfangsrichtung, als sogenannte Sperrlage bezeichnet. Die Stahlkorde der beiden Arbeitslagen weisen einen gleichen Winkel zwischen 15° und 30° in Bezug auf die Reifenumfangsrichtung auf, wobei die Stahlkorde der einen Arbeitslage gegenläufig zu den Stahlkorde der anderen Arbeitslage in Bezug auf die Reifenumfangsrichtung geneigt sind. So sind die Stahlkorde der einen Arbeitslage kreuzend zu den Stahlkorden der anderen Arbeitslage angeordnet. Die Arbeitslagen übernehmen hohe Scher- und Zugkräfte im Gürtel. Die radial äußerste Gürtellage weist Stahlkorde auf, welche einen Winkel zwischen 15° und 30° mit der Umfangsrichtung einschließen und hat die Funktion einer Schutzlage und schützt die Arbeitslagen vor Beschädigung beispielsweise durch Laufflächenverletzungen, eindringende Steine oder ähnliches.

Als Maßnahmen zur Verbesserung der Schnittbeständigkeit der Schutzlage ist es bekannt, den Abstand zwischen den Festigkeitsträgern der Schutzlage zu verringern und / oder den Durchmesser der Festigkeitsträger zu erhöhen. Durch solche Maßnahmen ist die Wahrscheinlichkeit, dass ein Schnitt durch die Schutzlage hindurchtritt und der Schnitt bis zur Arbeitslage dringt, reduziert. Die Anzahl an Schnittverletzungen der Schutzlage selbst ist jedoch nicht reduziert. Durch eine Verletzung der Schutzlage, welche insbesondere bei Schnittbeschädigung auftritt, dringt Wasser in das Innere des Gürtels ein, was zu Korrosion der Stahlkorde führt und die Runderneuerbarkeit des Reifens beeinträchtigt.

Aus der JP 2003 211 911 A ist ein Nutzfahrzeugreifen mit einem vierlagigen Gürtel bekannt, wobei die Festigkeitsträger jeder Gürtellage einen Winkel von mindestens 15° mit der Reifenumfangsrichtung einschließen und wobei der Abstand zwischen der zweiten und dritten Festigkeitsträgerlage größer ist als der Abstand zwischen der ersten und der zweiten Festigkeitsträgerlage und größer ist als der Abstand zwischen der dritten und der vierten Festigkeitsträgerlage. Die Festigkeitsträgerlagen sind von radial außen nach radial innen als erste bis vierte Festigkeitsträgerlage benannt. Ein solcher Reifen zeigt gute Komforteigenschaften.

Der Erfindung liegt die Aufgabe zugrunde, einen Nutzfahrzeugreifen zur Verfügung zu stellen, der sich durch eine verbesserte Haltbarkeit auszeichnet.

Gelöst wird die gestellte Aufgabe erfindungsgemäß dadurch, dass die Festigkeitsträger jeder Gürtellage des Gürtels mit der Reifenumfangsrichtung einen Winkel von mindestens 15° einschließen und dass die Gummierung der Schutzlage und / oder die Gummierung der radial äußeren Arbeitslage asymmetrisch bezüglich der Festigkeitsträgerlage der jeweiligen Gürtellage ausgeführt ist, wobei die Gummierung auf der Seite der Festigkeitsträgerlage der asymmetrisch gummierten Gürtellage, deren Gummierungsdicke zum Abstand D beiträgt, eine größere Gummierungsdicke aufweist als auf der jeweils anderen Seite der Festigkeitsträgerlage.

Der radiale Abstand D zwischen der ersten Festigkeitsträgerlage, d.h. der radial äußersten Festigkeitsträgerlage, also der Festigkeitsträgerlage der Schutzlage, und der zweiten Festigkeitsträgerlage, d.h. der radial äußersten Festigkeitsträgerlage der Arbeitslagen, ist im Vergleich zu den restlichen Abständen zwischen den Festigkeitsträgerlagen benachbarter Gürtellagen vergrößert. Hieraus ergibt sich eine elastischere Lagerung der ersten Festigkeitsträgerlage als wenn der Abstand D kleiner oder gleich dem Abstand zwischen den Arbeitslagen ist oder wenn alle Festigkeitsträgerlagen des Gürtels einen in etwa gleichen Abstand aufweisen. Durch die elastischere Lagerung ist der ersten Festigkeitsträgerlage bei Penetration eines Gegenstandes ein Ausweichen nach radial innen in Richtung der Arbeitslagen vereinfacht ermöglicht. Der Kontaktdruck zwischen penetrierendem Gegenstand und Festigkeitsträgern der ersten Festigkeitsträgerlage ist somit verringert, wodurch die Schnittkraft des penetrierenden Gegenstandes verringert ist. Beim Einsatz des Nutzfahrzeugreifens sind somit Verletzungen der Festigkeitsträger der Schutzlage wirkungsvoll reduziert oder vermieden. Auch eine durch Beschädigung der Festigkeitsträger begünstigte Korrosion der Festigkeitsträger ist hierdurch vermindert oder vermieden. Weiter ist die Schnittfestigkeit der ersten Festigkeitsträgerlage verbessert und, zusammen mit dem vergrößerten Abstand D der radial äußersten Festigkeitsträgerlage, auch eine Verringerung oder Vermeidung der Anzahl an Schnittverletzungen, die bis auf Festigkeitsträger der Arbeitslagen reichen, erwirkt. Als besonders vorteilhaft hat es sich dabei herausgestellt, wenn der Abstand D zwischen der ersten Festigkeitsträgerlage und der zweiten Festigkeitsträgerlage 2 mal bis 4,5 mal größer, bevorzugt 2,7 mal bis 3,3 mal größer, ist als der Abstand d. Es hat sich gezeigt, dass ein Nutzfahrzeugreifen mit solchen Lagenabständen eine deutlich reduzierte Zahl an Kordbrüchen der ersten Festigkeitsträgerlage aufweist bei gleichzeitig optimiertem Materialeinsatz. Weiter hat sich gezeigt, dass sich ein solcher Nutzfahrzeugreifen eine deutliche Reduktion der Zahl an Kordbrüchen der zweiten Festigkeitsträgerlage, also der radial äußersten Festigkeitsträgerlage der beiden Arbeitslagen, aufweist. Ein weiterer Vorteil ist, dass das Ausbreiten von etwaiger Korrosion von radial außen in die Arbeitslagen durch den vergrößerten Abstand zwischen erster und zweiter Festigkeitsträgerlage vermindert oder verhindert ist.

Hierdurch ist ein Nutzfahrzeugreifen zur Verfügung gestellt, der sich durch eine verbesserte Haltbarkeit, insbesondere eine verbesserte Haltbarkeit bei Penetration eines Gegenstandes, auszeichnet.

Der Abstand benachbarter Festigkeitsträgerlagen wird als radialer Abstand zwischen der die Festigkeitsträger der radial inneren Festigkeitsträgerlage von radial außen berührenden Einhüllenden und der die Festigkeitsträger der radial äußeren Festigkeitsträgerlage von radial innen berührenden Einhüllenden normal zur radial äußeren Festigkeitsträgerlage in der axialen Mitte des Reifens gemessen. Bevorzugt ist es, wenn zumindest der Abstand zwischen den entsprechenden Einhüllenden der ersten Festigkeitsträgerlage und der zweiten Festigkeitsträgerlage zumindest über die halbe axiale Breite der ersten Festigkeitsträgerlage in etwa konstant ist.

Besonders vorteilhaft ist eine Ausführung der Erfindung, bei der der Abstand D einen Wert von 1,2 mm bis 2,2 mm, bevorzugt von 1,2 mm bis 1,9 mm, besonders bevorzugt von 1,4 mm bis 1,7 mm einnimmt. Solche Abstände haben sich als besonders vorteilhaft zur Lösung des Zielkonfliktes aus Materialeinsatz und Haltbarkeit herausgestellt.

Entsprechende Vorteile ergeben sich, wenn der Abstand d einen Wert von 0,4 mm bis 0,7 mm, bevorzugt von 0,45 mm bis 0,6 mm, einnimmt.

Ein "tahlkord" ist ein linienförmiges Gebilde aus zumindest zwei Stahlfilamenten.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Teilquerschnitt durch einen Nutzfahrzeugreifen mit einem vierlagigen Gürtel,
Fig. 2 einen Teilquerschnitt durch die Gürtellagen eines vierlagigen Gürtels Nutzfahrzeugreifens gemäß einer Ausführungsvariante der Erfindung.
Fig. 3 einen Teilquerschnitt durch einen Nutzfahrzeugreifen mit einem dreilagigen Gürtel,
Fig. 4 einen Teilquerschnitt durch die Gürtellagen eines dreilagigen Gürtels Nutzfahrzeugreifens gemäß einer nicht erfindungsgemäßen Ausführungsform.

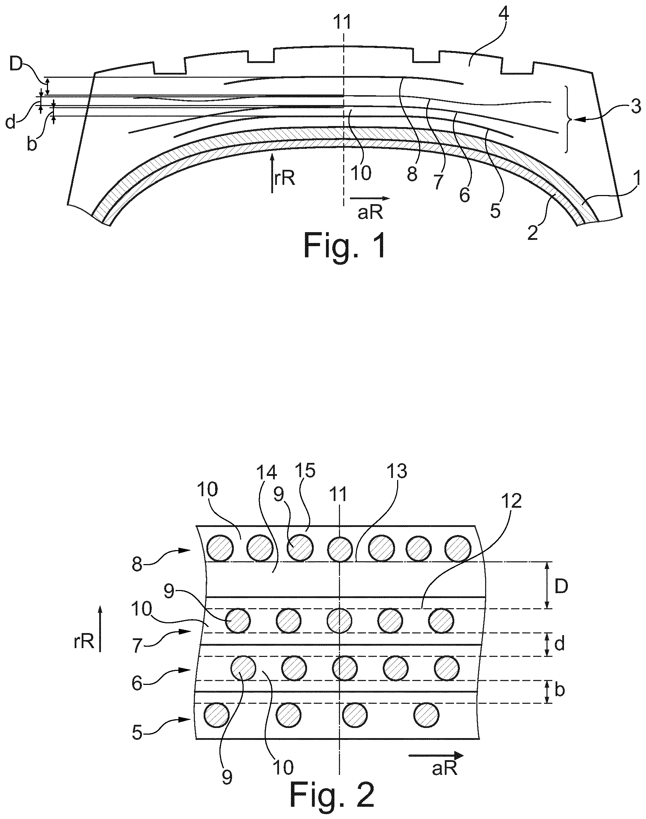

Fig. 1 zeigt schematisch einen Teilquerschnitt des Laufstreifen- und Gürtelbereiches eines Nutzfahrzeugreifens einer üblichen Standardkonstruktion mit einer Radialkarkasse 1, insbesondere üblichen Aufbaus, einer luftdichten Innenschicht 2, einem vierlagigen Gürtel 3 und einem profilierten Laufstreifen 4. Die weiteren Bestandteile des Reifens, wie die Seitenwände, die Komponenten von Wulstbereichen sowie etwaig vorgesehene Schulterpolster oder Gürtelkantenpolster an den Randbereichen des Gürtels 3 sind nicht dargestellt. Beim dargestellten Nutzfahrzeugreifen handelt es sich um einen runderneuerbaren Reifen für schwere Nutzfahrzeuge wie Baustellenfahrzeuge oder Minenfahrzeuge.

Der Gürtel 3 weist bei den gezeigten Ausführungsformen vier Gürtellagen mit jeweils einer Festigkeitsträgerlage 5, 6, 7, 8 mit Stahlkorden 9 (siehe Fig. 2) als Festigkeitsträger, welche innerhalb der Festigkeitsträgerlagen 5, 6, 7, 8 im Wesentlichen parallel zueinander angeordnet sind, sowie für jede Festigkeitsträgerlage 5, 6, 7, 8 eine die Festigkeitsträgerlage einbettende Gummierung 10, auf.

Von radial innen nach radial außen betrachtet ist die radial innerste Gürtellage eine Sperrlage aufweisend die vierte Festigkeitsträgerlage 5. Darauf folgen die sogenannten beiden Arbeitslagen, mit der dritten Festigkeitsträgerlage 6 und der zweiten Festigkeitsträgerlage 7, wobei die dritte Festigkeitsträgerlage 6 die breiteste Lage des Gürtels 3 ist. Die zweite Festigkeitsträgerlage 7 weist eine größere axiale Breite auf als die vierte Festigkeitsträgerlage 5. Die erste Festigkeitsträgerlage 8 ist der sogenannten Schutzlage zugeordnet und weist die geringste Lagenbreite auf. Die erste Festigkeitsträgerlage 8 kann jedoch auch gleich breit wie die zweite Festigkeitsträgerlage 7 ausgeführt sein. Sämtliche Festigkeitsträger des Gürtels 3 sind Stahlkorde 9 aus zumindest hochzugfestem Stahl bekannter Konstruktion.

Beim dargestellten Gürtel schließen die Festigkeitsträger 9 in der vierten Festigkeitsträgerlage 5 einen Winkel in der Größenordnung von 45° bis 65° mit der Umfangsrichtung ein. Die Festigkeitsträger in der zweiten und der dritten Festigkeitsträgerlage 6, 7 schließen mit der Umfangsrichtung einen Winkel zwischen 15° und 24° ein und verlaufen zueinander gekreuzt, die Festigkeitsträger in der ersten Festigkeitsträgerlage 8 verlaufen unter einem spitzen Winkel von 15° bis 24° zur Umfangsrichtung. Die Festigkeitsträger der vierten und der dritten Festigkeitsträgerlage 5, 6 weisen die gleiche Steigungsrichtung auf und die Festigkeitsträger der ersten und der zweiten Festigkeitsträgerlage 7, 8 weisen die hierzu entgegengesetzte Steigungsrichtung auf.

Gemäß der Erfindung ist der Abstand D zwischen der zweiten Festigkeitsträgerlage 7 und der ersten Festigkeitsträgerlage 8 um einen Faktor 2,5 bis 4,5 mal größer als der Abstand d zwischen der dritten Festigkeitsträgerlage 6 und der zweiten Festigkeitsträgerlage 7. Der Abstand benachbarter Festigkeitsträgerlagen wird als radialer Abstand zwischen der die Festigkeitsträger 9 der radial inneren Festigkeitsträgerlage von radial außen berührenden Einhüllenden 12 und der die Festigkeitsträger der radial äußeren Festigkeitsträgerlage von radial innen berührenden Einhüllenden 13 in der axialen Mitte 11 des Reifens gemessen (wie in Fig. 2 verdeutlicht).

Der Abstand D beträgt dabei 1,2 mm bis 1,9 mm. Die Abstände d und b, wobei b den Abstand zwischen der vierten Festigkeitsträgerlage 5 und der dritten Festigkeitsträgerlage 6 bezeichnet, sind in etwa gleich und betragen 0,4 mm bis 0,6 mm. Der Abstand D ist dabei um 0,5 mm bis 1,0 mm größer als die Abstände d und b. Zudem ist zumindest der Abstand zwischen den entsprechenden Einhüllenden 13 der ersten Festigkeitsträgerlage 8 und der Einhüllenden 12 zweiten Festigkeitsträgerlage 7, gemessen normal zur ersten Festigkeitsträgerlage 8, zumindest über die halbe axiale Breite der ersten Festigkeitsträgerlage 8 in etwa konstant.

Die Fig. 2 zeigt einen Teilquerschnitt durch eine Ausführungsvariante eines vierlagigen Gürtels 3 eines wie in der Fig. 1 gezeigten Nutzfahrzeugreifens im Bereich der axialen Mitte 11 des Fahrzeugluftreifens. Jede Gürtellage weist eine Festigkeitsträgerlage 5, 6, 7, 8 mit Stahlkorden 9 als Festigkeitsträger, welche innerhalb der Festigkeitsträgerlage im Wesentlichen parallel zueinander angeordnet sind, sowie für jede Festigkeitsträgerlage 5, 6, 7, 8 eine die Festigkeitsträgerlage einbettende Gummierung 10 auf.

Die Stahlkorde 9 in der ersten bis dritten Festigkeitsträgerlage 6, 7, 8 schließen jeweils einen Winkel von in etwa 18° mit der Umfangsrichtung ein. Die Festigkeitsträger der vierten Festigkeitsträgerlage schließen mit der Umfangsrichtung einen Winkel von in etwa 50° ein.

In der Fig. 2 ist beispielhaft die Messung der Abstände D, d, b verdeutlicht. Beispielsweise wird der Abstand D der benachbarten Festigkeitsträgerlagen 7, 8 als radialer Abstand zwischen der die Stahlkorde 9 der radial inneren Festigkeitsträgerlage 7 von radial außen berührenden Einhüllenden 12 und der die Stahlkorde 9 der radial äußeren Festigkeitsträgerlage 8 von radial innen berührenden Einhüllenden 13 in der axialen Mitte 11 des Reifens gemessen.

In der Fig. 2 ist der Abstand D um einen Faktor 3 größer als der Abstand d. Der Abstand D beträgt 1,5 mm. Die Abstände d und b sind in etwa gleich groß und betragen in etwa 0,5 mm. Die drei radial innersten Gürtellagen aufweisend die Festigkeitsträgerlagen 5, 6, 7 weisen jeweils eine Gummierung 10 auf, die symmetrisch bezüglich der jeweiligen Festigkeitsträgerlage ausgeführt ist. Die Gummierungsdicke aller drei Gürtellagen ist dabei in etwa gleich groß. Die Gummierung 10 der radial äußersten Gürtellage ist asymmetrisch bezüglich ihrer Festigkeitsträgerlage 8 ausgeführt. Dabei weist die Gummierung 10 auf der radial inneren Seite 14 der Festigkeitsträgerlage 8 eine größere Gummierungsdicke auf als auf der radial äußeren Seite 15. Die radial innere Seite 14 ist dabei der zweiten Festigkeitsträgerlage 7 zugewandt, wodurch die Gummierungsdicke der radial inneren Seite 14 zum Abstand D beiträgt.

Die erste Festigkeitsträgerlage 8 weist hochzugfeste Stahlkorde der Konstruktion 1 + 5 bei einer Festigkeitsträgerdichte von 52 epdm auf. Die zweite und dritte Festigkeitsträgerlage 7, 6 weisen hochzugfeste Stahlkorde der Konstruktion 3 + 8 bei einer Festigkeitsträgerdichte von 44 epdm auf. Die vierte Festigkeitsträgerlage 5 weist hochzugfeste Stahlkorde der Konstruktion 1 + 5 bei einer Festigkeitsträgerdichte von 30 epdm auf.

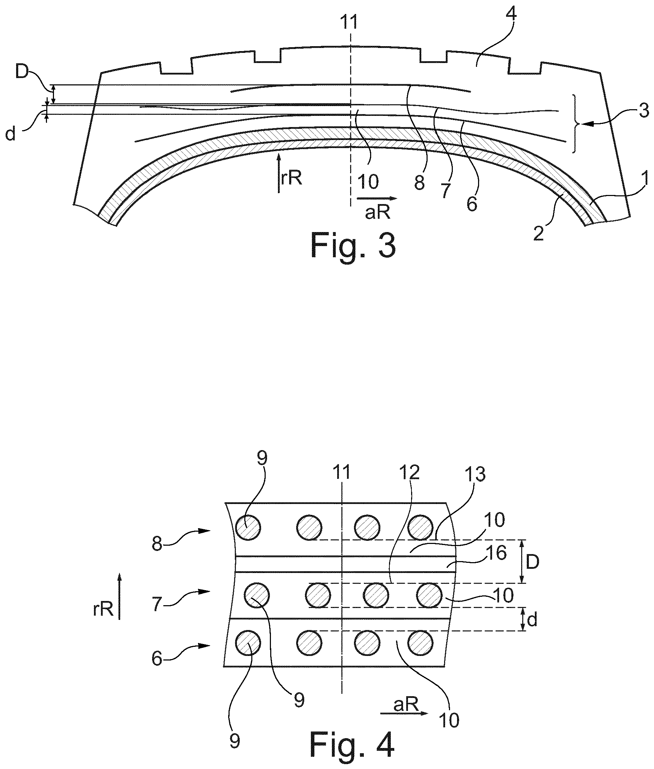

Fig. 3 zeigt schematisch einen Teilquerschnitt des Laufstreifen- und Gürtelbereiches eines Nutzfahrzeugreifens Der Reifen unterscheidet sich von dem in der Fig. 1 gezeigten Reifen dadurch, dass der Gürtel 3 genau drei Gürtellagen aufweisend jeweils eine Festigkeitsträgerlage 6, 7, 8 aufweist.

Von radial innen nach radial außen betrachtet sind dabei die beiden radial inneren Gürtellage die sogenannten beiden Arbeitslagen, mit der dritten Festigkeitsträgerlage 6 und der zweiten Festigkeitsträgerlage 7, wobei die radial innerste, die dritte, Festigkeitsträgerlage 6 die breiteste Lage des Gürtels 3 ist. Die erste Festigkeitsträgerlage 8 ist der sogenannten Schutzlage zugeordnet und weist die geringste Lagenbreite auf. Die erste Festigkeitsträgerlage 8 kann jedoch auch gleich breit wie die zweite Festigkeitsträgerlage 7 ausgeführt sein.

Beim dargestellten Gürtel schließen die Festigkeitsträger 9 in der ersten Festigkeitsträgerlage 8 und der zweiten Festigkeitsträgerlage 7 einen Winkel in der Größenordnung von 15° bis 19° mit der Umfangsrichtung ein. Die Festigkeitsträger in der dritten Festigkeitsträgerlage 6 schließen mit der Umfangsrichtung einen Winkel zwischen 20° und 26° ein. Die Festigkeitsträger der ersten und der zweiten Festigkeitsträgerlage 8, 7 weisen die gleiche Steigungsrichtung auf und die Festigkeitsträger der dritten Festigkeitsträgerlage 6 weisen die hierzu entgegengesetzte Steigungsrichtung auf.

Gemäß der Erfindung ist der Abstand D zwischen der zweiten Festigkeitsträgerlage 7 und der ersten Festigkeitsträgerlage 8 um einen Faktor 2 bis 4 größer als der Abstand d zwischen der dritten Festigkeitsträgerlage 6 und der zweiten Festigkeitsträgerlage 7. Der Abstand D beträgt dabei 1,2 mm bis 1,9 mm. Der Abstand d beträgt 0,4 mm bis 0,7 mm.

Die Fig. 4 zeigt eine nicht erfindungsgemäße Ausführungsform. Die Fig. 4 zeigt einen Teilquerschnitt durch einen dreilagigen Gürtel 3 eines wie in Fig. 3 gezeigten Nutzfahrzeugreifens im Bereich der axialen Mitte 11 des Fahrzeugluftreifens. Jede Gürtellage weist eine Festigkeitsträgerlage 6, 7, 8 mit Stahlkorden 9 als Festigkeitsträger, welche innerhalb der Festigkeitsträgerlage im Wesentlichen parallel zueinander angeordnet sind, sowie eine diese Festigkeitsträgerlage 6, 7, 8 einbettende Gummierung 10, auf.

Der Abstand D ist dabei um einen Faktor 3,2 größer als der Abstand d. Der Abstand D beträgt 1,7 mm. Alle drei Gürtellagen aufweisend die Festigkeitsträgerlagen 6, 7, 8 weisen eine Gummierung 10 auf, die in etwa symmetrisch bezüglich der jeweiligen Festigkeitsträgerlage ausgeführt ist. Radial zwischen der ersten Gürtellage und der zweiten Gürtellage ist zusätzlich eine Gummilage 16 angeordnet, welche zum Abstand D zwischen der zweiten Festigkeitsträgerlage 7 und der ersten Festigkeitsträgerlage 8 beiträgt.

Die erste Festigkeitsträgerlage 8 weist hochzugfeste Stahlkorde der Konstruktion 3 + 6 bei einer Festigkeitsträgerdichte von 60 epdm auf. Die Stahlkorde der ersten Festigkeitsträgerlage 8 und der zweiten Festigkeitsträgerlage 7 weisen jeweils einen Steigungswinkel von in etwa 18° mit der Umfangsrichtung auf. Die Stahlkorde der dritten Festigkeitsträgerlage 6 schließen einen Steigungswinkel von in etwa 24° mit der Umfangsrichtung ein. Die Stahlkorde der ersten und der zweiten Festigkeitsträgerlage 8, 7 weisen dabei die gleiche Steigungsrichtung und die Stahlkorde der dritten Festigkeitsträgerlage 6 die hierzu alternierende Steigungsrichtung auf.

### Bezugszeichenliste

- 1: Karkasse
- 2: Innenschicht
- 3: Gürtel
- 4: Laufstreifen
- 5: vierte Festigkeitsträgerlage
- 6: dritte Festigkeitsträgerlage
- 7: zweite Festigkeitsträgerlage
- 8: erste Festigkeitsträgerlage
- 9: Stahlkord
- 10: Gummierung
- 11: axiale Mitte
- 12: Einhüllende
- 13: Einhüllende
- 14: radial innere Seite
- 15: radial äußere Seite
- 16: Gummilage

- D: Abstand zwischen der ersten und zweiten Festigkeitsträgerlage
- d: Abstand zwischen der zweiten und dritten Festigkeitsträgerlage
- b: Abstand zwischen der dritten und vierten Festigkeitsträgerlage

- rR: radiale Richtung
- aR: axiale Richtung

## Patentansprüche

1. Nutzfahrzeugreifen in Radialbauart mit einem zumindest dreilagigen Gürtel (3), wobei jede Gürtellage des Gürtels (3) eine Festigkeitsträgerlage (5, 6, 7, 8) mit Stahlkorden (9) als Festigkeitsträger, welche innerhalb der Festigkeitsträgerlage (5, 6, 7, 8) im Wesentlichen parallel zueinander angeordnet sind, sowie eine die Festigkeitsträgerlage (5, 6, 7, 8) einbettende Gummierung (10) aufweist, wobei der Gürtel (3) als radial äußerste Lage eine Schutzlage mit der ersten Festigkeitsträgerlage (8) sowie von der Schutzlage nach radial innen betrachtet eine Arbeitslage mit der zweiten Festigkeitsträgerlage (7) und eine Arbeitslage mit der dritten Festigkeitsträgerlage (6) aufweist und wobei der Abstand D zwischen der ersten Festigkeitsträgerlage (8) und der zweiten Festigkeitsträgerlage (7) und der Abstand d zwischen den Festigkeitsträgerlagen (6, 7) der beiden Arbeitslagen die Relation 4,5 x d ≥ D ≥ 2 x d, bevorzugt die Relation 3,3 x d ≥ D ≥ 2,7 x d, erfüllen, wobei die Abstände gemessen sind in der axialen Mitte (11) des Reifens,
**dadurch gekennzeichnet, dass**
die Festigkeitsträger jeder Gürtellage des Gürtels (3) mit der Reifenumfangsrichtung einen Winkel von mindestens 15° einschließen und dass die Gummierung (10) der Schutzlage und / oder die Gummierung (10) der radial äußeren Arbeitslage asymmetrisch bezüglich der Festigkeitsträgerlage (8, 7) der jeweiligen Gürtellage ausgeführt ist, wobei die Gummierung (10) auf der Seite der Festigkeitsträgerlage (8, 7) der asymmetrisch gummierten Gürtellage, deren Gummierungsdicke zum Abstand D beiträgt, eine größere Gummierungsdicke aufweist als auf der jeweils anderen Seite der Festigkeitsträgerlage (8, 7).

2. Nutzfahrzeugreifen nach Anspruch 1, **dadurch gekennzeichnet, dass** der Abstand D einen Wert von 1,2 mm bis 2,2 mm, bevorzugt von 1,2 mm bis 1,9 mm, besonders bevorzugt von 1,4 mm bis 1,7 mm, einnimmt.

3. Nutzfahrzeugreifen nach Anspruch 1 oder 2, **dadurch gekennzeichnet, dass** der Abstand d einen Wert von 0,4 mm bis 0,7 mm, bevorzugt von 0,45 mm bis 0,6 mm, einnimmt.

## Claims

1. Commercial vehicle tyre of radial design with an at least three-ply belt (3), wherein each belt ply of the belt (3) has a reinforcing element ply (5, 6, 7, 8) with steel cords (9) as the reinforcing elements, which are arranged substantially parallel to one another within the reinforcing element ply (5, 6, 7, 8), and a rubber coating (10) embedding the reinforcing element ply (5, 6, 7, 8), wherein the belt (3) has, as the radially outermost ply, a protective ply with the first reinforcing element ply (8) and, as viewed radially inwards from the protective ply, a working ply with the second reinforcing element ply (7) and a working ply with the third reinforcing element ply (6), and wherein the distance D between the first reinforcing element ply (8) and the second reinforcing element ply (7) and the distance d between the reinforcing element plies (6, 7) of the two working plies satisfy the relationship 4.5 × d ≥ D ≥ 2 × d, preferably the relationship 3.3 × d ≥ D ≥ 2.7 × d, wherein the distances are measured in the axial centre (11) of the tyre,
**characterized in that**
the reinforcing elements of each belt ply of the belt (3) enclose an angle of at least 15° with the tyre circumferential direction, and **in that** the rubber coating (10) of the protective ply and/or the rubber coating (10) of the radially outer working ply is/are formed asymmetrically with respect to the reinforcing element ply (8, 7) of the respective belt ply, wherein the rubber coating (10) on the side of the reinforcing element ply (8, 7) of the asymmetrically rubber-coated belt ply, the rubber coating thickness of which contributes to the distance D, has a greater rubber coating thickness than on the respective other side of the reinforcing element ply (8, 7).

2. Commercial vehicle tyre according to Claim 1, **characterized in that** the distance D takes up a value of 1.2 mm to 2.2 mm, preferably of 1.2 mm to 1.9 mm, particularly preferably of 1.4 mm to 1.7 mm.

3. Commercial vehicle tyre according to Claim 1 or 2, **characterized in that** the distance d takes up a value of 0.4 mm to 0.7 mm, preferably of 0.45 mm to 0.6 mm.

## Revendications

1. Pneu de véhicule utilitaire de type à construction radiale comprenant une ceinture (3) à au moins trois couches, chaque couche de ceinture de la ceinture (3) possédant une couche de supports de renfort (5, 6, 7, 8) dotée de fils métalliques (9) en tant que supports de renfort, lesquels sont disposés sensiblement en parallèle les uns des autres à l'intérieur de la couche de supports de renfort (5, 6, 7, 8), ainsi qu'un gommage (10) qui enrobe la couche de supports de renfort (5, 6, 7, 8), la ceinture (3) possédant comme couche la plus à l'extérieur dans le sens radial une couche de protection avec la première couche de supports de renfort (8) ainsi que, vu dans le sens radial vers l'intérieur depuis la couche de protection, une couche de travail avec la deuxième couche de supports de renfort (7) et une couche de travail avec la troisième couche de supports de renfort (6) et l'écart D entre la première couche de supports de renfort (8) et la deuxième couche de supports de renfort (7) et l'écart d entre les couches de supports de renfort (6, 7) des deux couches de travail vérifiant la relation 4,5 x d ≥ D ≥ 2 x d, de préférence la relation 3,3 x d ≥ D ≥ 2,7 x d, les écarts étant mesurés dans le centre axial (11) du pneu,
**caractérisé en ce que**
les supports de renfort de chaque couche de ceinture de la ceinture (3) forment un angle d'au moins 15° avec la direction périphérique du pneu et **en ce que** le gommage (10) de la couche de protection et/ou le gommage (10) de la couche de travail la plus à l'extérieur dans le sens radial sont réalisés asymétriques par rapport à la couche de supports de renfort (8, 7) de la couche de ceinture respective, le gommage (10) sur le côté de la couche de supports de renfort (8, 7) de la couche de ceinture gommée de manière asymétrique dont l'épaisseur de caoutchouc contribue à l'écart D possédant une épaisseur de caoutchouc supérieure à celle de l'autre côté de la couche de supports de renfort (8, 7).

2. Pneu de véhicule utilitaire selon la revendication 1, **caractérisé en ce que** l'écart D prend une valeur de 1,2 mm à 2,2 mm, de préférence de 1,2 mm à 1,9 mm, notamment de préférence de 1,4 mm à 1,7 mm.

3. Pneu de véhicule utilitaire selon la revendication 1 ou 2, **caractérisé en ce que** l'écart d prend une valeur de 0,4 mm à 0,7 mm, de préférence de 0,45 mm à 0,6 mm.
